(19) **Europäisches Patentamt**
**European Patent Office**
**Office européen des brevets**

(11) **EP 4 089 947 A1**

(12) **EUROPEAN PATENT APPLICATION**
published in accordance with Art. 153(4) EPC

(43) Date of publication:
**16.11.2022 Bulletin 2022/46**

(21) Application number: **21738319.9**

(22) Date of filing: **04.01.2021**

(51) International Patent Classification (IPC):
**H04L 5/00** *(2006.01)*

(52) Cooperative Patent Classification (CPC):
**H04L 5/00**

(86) International application number:
**PCT/CN2021/070059**

(87) International publication number:
**WO 2021/139609 (15.07.2021 Gazette 2021/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.01.2020 CN 202010026566**

(71) Applicant: **Sony Group Corporation**
**Minato-Ku, Tokyo, 108-0075 (JP)**

(72) Inventors:
• **SUN, Chen**
**Beijing 100028 (CN)**
• **TIAN, Zhong**
**Beijing 100028 (CN)**

(74) Representative: **D Young & Co LLP**
**120 Holborn**
**London EC1N 2DY (GB)**

(54) **ELECTRONIC DEVICE, WIRELESS COMMUNICATION METHOD, AND COMPUTER READABLE STORAGE MEDIUM**

(57) The present invention relates to an electronic device, a wireless communication method, and a computer readable storage medium. The electronic device according to the present invention comprises a processing circuit, configured to: determine an interference relationship graph between multiple base station devices according to environmental information and/or transmit beam information of each of the multiple base station devices; determine a uplink and downlink subframe configuration mode of each base station device according to the interference relationship graph; and determine a transmission time period of each base station device according to the uplink and downlink subframe configuration mode of each base station device, so that transmission time periods of two adjacent base station devices having different uplink and downlink subframe configuration modes do not overlap. By using the electronic device, the wireless communication method, and the computer readable storage medium according to the present invention, uplink and downlink subframe configuration modes and transmission time can be set for the multiple base station devices within a predetermined region, thereby reducing the interference between the multiple base station devices due to different modes.

Figure 1

## Description

The present application claims priority to Chinese Patent Application No. 202010026566.7, titled "ELECTRONIC DEVICE, WIRELESS COMMUNICATION METHOD, AND COMPUTER READABLE STORAGE MEDIUM", filed on January 10, 2020 with the Chinese Patent Office, which is incorporated herein by reference in its entirety.

## FIELD

The embodiments of the present disclosure generally relates to the field of wireless communication, and in particular to electronic equipment, a wireless communication method and a computer readable storage medium. More particularly, the present disclosure relates to electronic equipment for determining a mode of uplink and downlink subframe configurations and a transmission time period of base station equipment, a wireless communication method performed by the electronic equipment, and a computer readable storage medium.

## BACKGROUND

A mode of uplink and downlink subframe configurations refers to a mode of uplink and downlink matching of TDD. Each mode specifies whether uplink data or downlink data is transmitted in different subframes, time slots or OFDM symbols. For example, in a TDD-LTE system, a mode 0 indicates that 10 subframes are downlink, special subframe, uplink, uplink, uplink, downlink, special subframe, uplink, uplink and uplink respectively. In an NR system, more modes are supported because symbol-level uplink and downlink transmission is supported.

Base station equipment may have different modes of uplink and downlink configurations. In a case where base station equipment A and base station equipment B which are neighboring and have different modes of uplink and downlink configurations, it may occur a case where the base station equipment A is receiving data (uplink transmission) from user equipment C while the base station equipment B is sending data (downlink transmission) to user equipment D. In this case, a signal from the base station equipment B may reach the base station equipment A to interfere with the base station equipment A, or a signal from the user equipment C may reach the user equipment D to interfere with the user equipment D. That is, interference may occur in a case where two base station equipment which are neighboring and have the same or adjacent frequencies and different modes of uplink and downlink configurations.

Therefore, it is necessary to provide a technical solution to determine modes of uplink and downlink subframe configurations and transmission time periods for multiple base station equipment in a predetermined region, so as to reduce the interference caused by difference of modes of the multiple base station equipment.

## SUMMARY

The summary part provides a general summary of the present disclosure, rather than a comprehensive disclosure of a full scope or all features of the present disclosure.

Electronic equipment, a wireless communication method and a computer readable storage medium are provided according to the present disclosure to determine modes of uplink and downlink subframe configurations and transmission time periods for multiple base station equipment in a predetermined region, so that neighboring base station equipment have the same mode as much as possible. In addition, base station equipment which are neighboring and have different modes operate in an alternating silent manner, reducing the interference caused by difference of modes of the multiple base station equipment.

According to an aspect of the present disclosure, electronic equipment is provided. The electronic equipment includes processing circuitry configured to: determine an interference relation graph among multiple base station equipment according to environmental information and/or transmission beam information of each base station equipment of the multiple base station equipment, where a node in the interference relation graph represents base station equipment, and a side between two nodes represents a presence of interference between two base station equipment represented by the two nodes; determine a mode of uplink and downlink subframe configurations of each base station equipment according to the interference relation graph; and determine a transmission time period of each base station equipment according to the mode of uplink and downlink subframe configurations of the base station equipment, such that transmission time periods of two base station equipment which are neighboring and have different modes of uplink and downlink subframe configurations are not overlapped.

According to another aspect of the present disclosure, a wireless communication method performed by the electronic equipment is provided. The method includes: determining an interference relation graph among multiple base station equipment according to environmental information and/or transmission beam information of each base station equipment of the multiple base station equipment, where a node in the interference relation graph represents base station equipment, and a side between two nodes represents a presence of interference between two base station equipment represented by the two nodes; determining a mode of uplink and downlink subframe configurations of each base station equipment according to the interference relation graph; and determining a transmission time period of each base station equipment according to the mode of uplink and downlink subframe configurations of the base station equipment, such that transmission time periods of two base station equipment which are neighboring and have different modes of uplink and downlink subframe configurations are not overlapped.

According to another aspect of the present disclosure, a computer readable storage medium is provided. The computer readable storage medium includes executable computer instructions that, when executed by a computer, cause the computer to perform the wireless communication method according to the present disclosure.

With the electronic equipment, the wireless communication method, and the computer readable storage medium according to the present disclosure, the electronic equipment determines the interference relation graph among multiple base station equipment, determines the mode of uplink and downlink subframe configurations of each base station equipment according to the interference relation graph, and determines the transmission time period of each base station equipment according to the mode of uplink and downlink subframe configurations of the base station equipment, such that base station equipment which are neighboring and have different modes transmit data in an alternating silent manner. In this way, neighboring base station equipment have the same mode as much as possible. In addition, base station equipment which are neighboring and have different modes operate in an alternating silent manner, reducing the interference caused by difference of modes of the multiple base station equipment.

A further applicable field becomes apparent from the description herein. The description and specific examples in the summary are only illustrative and are not intended to limit the scope of the present disclosure.

BRIEF DESCRIPTION OF THE DRAWINGS

The drawings described herein are used for illustrating the selected embodiments only rather than all of possible embodiments, and are not intended to limit the scope of the present disclosure. In the drawings:

Figure 1 is a block diagram showing a configuration example of electronic equipment according to an embodiment of the present disclosure;

Figure 2 is a schematic diagram showing distribution of base station equipment arranged in a predetermined region according to an embodiment of the present disclosure;

Figure 3 is a schematic diagram showing an interference relation graph among multiple base station equipment according to an embodiment of the present disclosure;

Figure 4 is a schematic diagram showing interference relation graphs corresponding to respective modes according to an embodiment of the present disclosure;

Figure 5 is a schematic diagram showing connected subgraphs corresponding to respective modes according to an embodiment of the present disclosure;

Figure 6 is a schematic diagram showing a process of determining connected subgraphs corresponding to respective modes according to an embodiment of the present disclosure;

Figure 7 is a schematic diagram showing changes of other connected subgraphs after modes of nodes in a connected subgraph 2 corresponding to a mode 3 are determined as mode 3 according to an embodiment of the present disclosure;

Figure 8 exemplary shows an interference relation graph after modes of uplink and downlink subframe configurations of all base station equipment are determined;

Figure 9 is a flowchart of a wireless communication method performed by electronic equipment according to an embodiment of the present disclosure;

Figure 10 is a flowchart of determining a mode of uplink and downlink subframe configurations and a transmission time period of base station equipment according to an embodiment of the present disclosure; and

Figure 11 is a block diagram showing an example of a server implemented as electronic equipment according to the present disclosure.

Although the present disclosure is susceptible to various modifications and substitutions, specific embodiments thereof are shown in the drawings as examples and are described in detail herein. However, it should be understood that the description of specific embodiments herein is not intended to limit the present disclosure into a disclosed specific form. Instead, the present disclosure aims to cover all modifications, equivalents and substitutions falling in the spirit and the scope of the present disclosure. It should be noted that, corresponding reference numerals indicate corresponding components throughout the drawings.

**DETAILED DESCRIPTION OF EMBODIMENTS**

Now, examples of the present disclosure are described more fully with reference to the drawings. The following description is merely illustrative in nature and is not intended to limit the present disclosure and application or use.

Exemplary embodiments are provided so that the present disclosure can become exhaustive and the scope of the present disclosure can be fully conveyed to those skilled in the art. Examples of various specific details such as specific components, apparatuses, and methods are set forth to provide detailed understanding of the embodiments of the present disclosure. It is apparent to those skilled in the art that without specific details, the exemplary embodiments may be implemented in multiple different forms, none of which is construed as limiting the scope of the present disclosure. In some exemplary embodiments, well-known processes, well-known structures, and well-known technologies are not described in detail.

The present disclosure is described in the following order:

1. Description of System

2. Configuration Example of Electronic Equipment

3. Method Embodiment

4. Application Example

<1. Description of System >

As mentioned above, there may be interference between two base station equipment which are neighboring and have the same or adjacent frequencies and different modes of uplink and downlink subframe configurations. This case may occur in an LTE system. In other words, in a case where two neighboring base station equipment have the same or adjacent frequencies and have different modes of uplink and downlink configurations of LTE-TDD, there may be interference between the two base station equipment. In an embodiment, this case may also occur in an NR system. In other words, in a case where two neighboring base station equipment have the same or adjacent frequencies and have different modes of uplink and downlink configurations of NR, there may be interference between the two base station equipment. Further, this case may also occur in a heterogeneous network including an LTE system and an NR system. For example, in America, a frequency band from the 3.4GHz to 3.8GHz originally serves as a military radar band. The Federal Communications Commission (FCC) proposed to commercialize this band, and the band is referred to as Citizen Broadband Radio Service (CBRS). Generally, CBRS allows three levels of user system to access, and the three levels of user system are Incumbent Access (IA), Priority Access Licensed (PAL) and General Authorized Access (GAA) with a descending order of accessing priority. In a CBRS frequency band, for the PAL network, LTE-TDD system and the NR system are allowed to coexist. In this heterogeneous network, one of two neighboring base station equipment has a mode of LTE-TDD while the other of the two neighboring base station equipment has a mode of NR. Difference of the two modes of uplink and downlink configurations results in misalignment of uplink and downlink time slots or symbols. In this case, there may be interference between the two base station equipment.

Therefore, the wireless communication system according to the present disclosure may be the LTE-TDD communication system, the NR communication system, or a heterogeneous communication system including the LTE-TDD communication system and the NR communication system.

In addition, according to the embodiments of the present disclosure, in the heterogeneous communication system including the LTE-TDD communication system and the NR communication system, modes of uplink and downlink subframe configurations being the same refers to that uplink and downlink time slots or symbols of the two modes are completely aligned. For example, in the LTE-TDD communication system, two identical modes (serial numbers of the two modes are the same) are regarded as the same mode. In the NR communication system, two identical modes (serial numbers of the two modes are the same) are regarded as the same mode. In addition, there may be a case where: a serial number of a mode of uplink and downlink subframe configurations in the NR communication system is different from a serial number of a mode of the uplink and downlink subframe configurations in the LTE-TDD communication system, but uplink and downlink time slots or symbols of the two modes are completely aligned. Such two modes are regarded as the same mode in the present disclosure.

According to the embodiments of the present disclosure, electronic equipment for configuring a mode of uplink and downlink subframes and a transmission time period for base station equipment in a predetermined region may be set in the predetermined region. The electronic equipment may be arranged in the cloud or integrated in the base station equipment in the predetermined region. According to the embodiments of the present disclosure, multiple base station equipment have not been put into use in the predetermined region. For example, the operator plans to put a certain number of base station equipment in the predetermined region. In this case, the electronic equipment may configure modes of uplink and downlink subframes and transmission time periods for these base station equipment, such that neighboring base station equipment have the same mode as much as possible and base station equipment which are neighboring and have different modes operate in an alternating silent manner, reducing interference between base station equipment caused by difference of modes of the base station equipment. In an embodiment, there may already be some base station equipment whose modes are determined in the predetermined region. In this case, the electronic equipment may configure transmission time periods for these base station equipment, such that base station equipment which are neighboring and have different modes operate in an alternating silent manner, reducing the interference between the base station equipment caused by difference of modes.

According to the embodiments of the present disclosure, the base station equipment may be evenly distributed in a wireless communication system such as a cellular communication system. Alternatively, the base station equipment may be unevenly distributed. That is, in the present disclosure, positions at which the base station equipment are distributed are not limited, and the base station equipment may be arranged at any positions in the predetermined region.

The electronic equipment according to the embodiments of the present disclosure may be implemented as any type of server, such as a tower server, a rack server, and a blade server. The electronic equipment may be a control module (such as an integrated circuit module including a single chip, and a card or blade inserted into a slot of a blade server) mounted on the server.

The base station equipment according to the embodiments of the present disclosure may be implemented as a macro eNB and a small eNB. The base station equipment may also be implemented as any type of gNB (a base station in a 5G system). The small eNB may be an eNB of a cell having a smaller coverage than a macro cell, such as a pico eNB, a micro eNB and a home (femto) eNB. Alternatively, the base station may be implemented as any other type of base station, such as a NodeB and a base transceiver station (BTS). The base station may include: a main body (also referred to as a base station device) configured to control the wireless communication; and one or more remote radio heads (RRH) arranged at a different location from the main body.

<2. Configuration Example of Electronic Equipment>

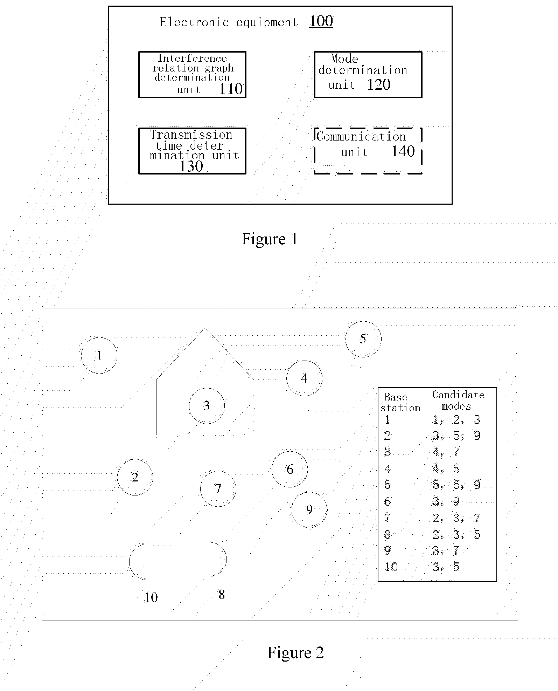

Figure 1 is a block diagram showing a configuration example of electronic equipment 100 according to an embodiment of the present disclosure. The electronic equipment 100 herein may serve as a server in a wireless communication system to determine a mode of uplink and downlink subframe configurations and/or a transmission time period for base station equipment within a service coverage of the electronic equipment 100, so as to reduce the interference between the base station equipment caused by the difference of modes of uplink and downlink subframe configurations. For example, the electronic equipment 100 may be arranged in the cloud or integrated in base station equipment.

As shown in Figure 1, the electronic equipment 100 may include an interference relation graph determination unit 110, a mode determination unit 120, and a transmission time determination unit 130.

Units of the electronic equipment 100 may be included in processing circuitry. It should be noted that the electronic equipment 100 may include one processing circuitry or multiple processing circuitry. Further, the processing circuitry may include various discrete functional units to perform various functions and/or operations. It should be noted that these functional units may be physical entities or logical entities, and units with different names may be implemented by one physical entity.

According to the embodiments of the present disclosure, the interference relation graph determination unit 110 may determine an interference relation graph among multiple base station equipment according to environmental information and/or transmission beam information of the base station equipment. A node in the interference relation graph represents base station equipment, and a side between two nodes represents a presence of interference between two base station equipment represented by the two nodes.

According to the embodiments of the present disclosure, the mode determination unit 120 may determine a mode of uplink and downlink subframe configurations of each base station equipment according to the interference relation graph.

According to the embodiments of the present disclosure, the transmission time determination unit 130 may determine a transmission time period of each base station equipment according to the mode of uplink and downlink subframe configurations of the base station equipment, such that two base station equipment which are neighboring and have different modes of uplink and downlink subframe configurations transmit data in orthogonal time.

Therefore, according to the embodiments of the present disclosure, the electronic equipment 100 determines the interference relation graph among multiple base station equipment, determines the mode of uplink and downlink subframe configurations of each base station equipment according to the interference relation graph, and determines the transmission time period of each base station equipment according to the mode of uplink and downlink subframe configurations of the base station equipment, such that base station equipment which are neighboring and have different modes transmit data in an alternating silent manner. In this way, neighboring base station equipment have the same mode as much as possible. In addition, base station equipment which are neighboring and have different modes operate in an alternating silent manner, reducing the interference caused by difference of modes of the multiple base station equipment.

According to the embodiments of the present disclosure, the interference relation graph determination unit 110 may determine the interference relation graph among the multiple base station equipment according to the environmental information of the base station equipment. Here the environmental information may include information indicating whether the base station equipment is located in an indoor environment or an outdoor environment.

According to the embodiments of the present disclosure, in a case where one of two base station equipment is located in an indoor environment and the other of the two base station equipment is located in an outdoor environment, the interference relation graph determination unit 110 determines an absence of interference between the two base station equipment. The base station equipment located in the indoor environment is well isolated from the base station equipment located in the outdoor environment. Therefore, in this case, the interference between the two base station equipment is ignored, and thus an operation of the interference relation graph determination unit 110 is simplified.

According to the embodiments of the present disclosure, the interference relation graph determination unit 110 may determine the interference relation graph among the multiple base station equipment according to the transmission beam information of the base station equipment. Here the transmission beam information may include direction information of a transmission beam of the base station equipment.

According to the embodiments of the present disclosure, in a case where a transmit beam direction of one of two base station equipment is away from the other of the two base station equipment and where a transmit beam direction of the other of the two base station equipment is away from the one of the two base station equipment, an absence of interference between the two base station equipment is determined. That is, in a case where a transmit beam direction of a base station equipment A is away from a base station equipment B and a transmit beam direction of the base station equipment B is away from the base station equipment A, the interference relation graph determination unit 110 may determine an absence of interference between the base station equipment A and the base station equipment B. Here, the transmit beam direction of the base station equipment A being away from the base station equipment B indicates an angle between the transmit beam direction of the base station equipment A and a direction pointing from the base station equipment A pointing to the base station equipment B is greater than a predetermined threshold, for example, 90 degrees. In this case, intensity of the beam transmitted by the base station equipment A to the base station equipment B is weak, so that the interference of the base station equipment A to the base station equipment B is ignored. Conversely, the transmit beam direction of the base station equipment B being away from the base station equipment A indicates an angle between the transmit beam direction of the base station equipment B and a direction pointing from the base station equipment B pointing to the base station equipment A is greater than a predetermined threshold, for example, 90 degrees. According to the embodiments of the present disclosure, the operation of the interference relation graph determination unit 110 can be simplified according to the transmit beam directions of the base station equipment.

According to the embodiments of the present disclosure, the interference relation graph determination unit 110 may determine whether there is interference between base station equipment according to position information and transmission power information of the base station equipment, and frequency domain resources used by the base station equipment.

According to the embodiments of the present disclosure, the interference relation graph determination unit 110 may determine whether there is interference between base station equipment according to frequency domain resources used by the base station equipment. In a case where frequency domain resources used by two base station equipment are not identical and not neighboring, the interference relation graph determination unit 110 may determine an absence of interference between the two base station equipment.

According to the embodiments of the present disclosure, in a case where frequency domain resources used by two base station equipment are identical or neighboring, the interference relation graph determination unit 110 may determine a signal to interference plus noise ratio according to position information and transmission power information of the two base station equipment. In addition, in a case where the signal to interference plus noise ratio is less than a predetermined threshold, the interference relation graph determination unit 110 may determine a presence of interference between the two base station equipment.

According to the embodiments of the present disclosure, it may be determined whether there is interference between any two base station equipment (also referred to as a base station equipment pair) among multiple base station equipment. For example, after it is determined a base station equipment pair without interference according to environmental information of the base station equipment, transmission beam information of the base station equipment and/or frequency domain resources used by the base station equipment, the interference relation graph determination unit 110 may determine whether there is interference between remaining base station equipment pairs according to signal to interference plus noise ratios of the remaining base station equipment pairs. Further, in determining whether there is interference between a base station equipment a and a base station equipment b, the interference relation graph determination unit 110 may separately determine whether the base station equipment a interferes with the base station equipment b and whether the base station equipment b interferes with the base station equipment a. Further, in a case where at least one of conditions that the base station equipment a interferes with the base station equipment b and the base station equipment b interferes with the base station equipment a is met, the interference relation graph determination unit 110 determines a presence of interference between the base station equipment a and the base station equipment b.

According to the embodiments of the present disclosure, the interference relation graph determination unit 110 may determine the interference according to a signal to interference plus noise ratio. For example, in a case where the signal to interference plus noise ratio of the base station equipment a is less than a predetermined threshold, it is determined that the base station equipment b interferes with the base station equipment a. In a case where the signal to interference plus noise ratio of the base station equipment b is less than the predetermined threshold, it is determined that the base station equipment a interferes with the base station equipment b.

Next, the operation mode of the interference relation graph determination unit 110 is described in detail below by taking calculation of the signal to interference plus noise ratio of the base station equipment a as an example.

According to the embodiments of the present disclosure, the interference relation graph determination unit 110 may determine that the base station equipment a suffers the interference from the base station equipment b according to the transmission power of the base station equipment b and a distance between the base station equipment a and the base station equipment b. For example, the interference relation graph determination unit 110 may determine the interference suffered by the base station equipment a from the base station equipment b according to the following equation:

$$I_a^b = P_{Tx} \cdot G_{Tx} \cdot (\frac{\lambda}{4\pi d_a^b})^\alpha$$

In the above equation, $I_a^b$ represents the interference suffered by the base station equipment a from the base station equipment b. $P_{TX}$ represents the transmission power of the base station equipment b. $G_{TX}$ represents an antenna gain of the base station equipment b. $d_a^b$ represents the distance between the base station equipment a and the base station equipment b. $\lambda$ and $\alpha$ represent constants. Here the interference relation graph determination unit 110 may acquire $P_{TX}$ and $G_{TX}$ from the base station equipment b, and determine $d_a^b$ according to positions of the base station equipment a and the base station equipment b.

Further, the interference relation graph determination unit 110 may determine the signal to interference plus noise ratio of the base station equipment a according to the interference suffered by the base station equipment a from the base station equipment b and the reception power of the base station equipment a. Here, the base station equipment a may measure a signal from the base station equipment b to determine the reception power of the base station equipment a, and transmit the reception power of the base station equipment a to the electronic equipment 100, so that the electronic equipment 100 obtains the reception power of the base station equipment a. For example, the interference relation graph determination unit 110 may calculate the signal to interference plus noise ratio of the base station equipment a according to the following equation:

$$SINR_a^b = \frac{P_{Rx}}{I_a^b + N_0}$$

In the above equation, $SINR_a^b$ represents the signal to interference plus noise ratio of the base station equipment a. $P_{RX}$ represents the reception power of the base station equipment a. No represents a white noise.

Further, the interference relation graph determination unit 110 may determine whether the base station equipment a is interfered by the base station equipment b according to the signal to interference plus noise ratio of the base station equipment a and a signal to interference plus noise ratio threshold $SINR_{th}$ of the base station equipment a.

For example, in a case where $SINR_a^b$ is less than $SINR_{th}$, it is determined that the base station equipment a is interfered by the base station equipment b, that is, there is a side between the node representing the base station equipment a and the node representing the base station equipment b.

As described above, the interference relation graph determination unit 110 may determine whether there is a side between the base station equipment a and the base station equipment b according to the signal to interference plus noise ratio of the base station equipment a. Similarly, the interference relation graph determination unit 110 may also determine whether there is a side between the base station equipment a and the base station equipment b according to the signal to interference plus noise ratio of the base station equipment b, which is not repeated in the present disclosure.

As shown in Figure 1, according to the embodiments of the present disclosure, the electronic equipment 100 may further include a communication unit 140 configured to receive information from equipment other than the electronic equipment 100 or transmit information to equipment other than the electronic equipment 100.

According to the embodiments of the present disclosure, the electronic equipment 100 may receive at least one of the following information from each base station equipment through the communication unit 140: environmental information of the base station equipment, transmission beam information of the base station equipment, position information of the base station equipment, transmission power information of the base station equipment, and information of frequency domain resources used by the base station equipment.

Figure 2 is a schematic diagram showing distribution of base station equipment arranged in a predetermined region according to an embodiment of the present disclosure. As shown in Figure 2, ten base station equipment numbered 1 to 10 are shown. It is assumed that base station equipment 3 is located indoors, and other base station equipment are located outdoors. A direction of a transmission beam of the base station equipment 10 is the positive left of Figure 2, and a direction of a transmission beam of the base station equipment 8 is the positive right of Figure 2. In addition, Figure 2 further shows optional modes (candidate modes) information of the base station equipment 1 to 10. That is, each base station equipment can only select one mode from the optional modes of the base station equipment for operation. For example, the base station equipment 1 can select one mode from modes 1, 2, and 3 for operation.

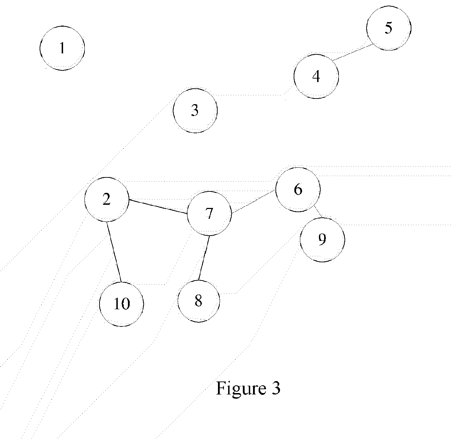

Figure 3 is a schematic diagram showing an interference relation graph among the multiple base station equipment shown in Figure 2. As shown in Figure 3, since the base station equipment 3 is located indoors and other base station equipment are located outdoors, there is no side between the base station equipment 3 and each of other base station equipment. Further, since the direction of the transmission beam of the base station equipment 8 is far away from the base station equipment 10 and the direction of the transmission beam of the base station equipment 10 is far away from the base station equipment 8, there is no side between the base station equipment 8 and the base station equipment 10. For each of other base station equipment pairs, the interference relation graph determination unit 110 may determine whether there is interference between the base station equipment pairs according to the frequency domain resources, positions and transmission power of the base station equipment as described above, so as to determine the interference relation graph as shown in Figure 3.

According to the embodiments of the present disclosure, the electronic equipment 100 may store and represent the interference relation graph using a matrix. Assuming that the number of the base station equipment is R, the interference relation graph may be represented by a matrix T, and a size of T is $R \times R$. An element $T_{ij}$ in T represents a probability of presence of interference between a base station i and a base station j, where i, $j \in [1, R]$ and i≠j. A diagonal element $T_{ii}$ represents a mode of the base station i, and an initial value of $T_{ii}$ is equal to -1. Since sides in the interference relation graph are undirected, only values of an upper triangular matrix of the matrix T are required to be recorded. For example, candidate modes of the base station i are mode 1 and mode 2 and candidate modes of the base station j are mode 2 and mode 3, so that interference is absent only in a case where both the base station i and the base station j select mode 2. Therefore, the probability of presence of interference between the base station i and the base station j is equal to 3/4.

According to the embodiments of the present disclosure, the mode determination unit 120 may determine, with respect to each mode of one or more candidate modes of uplink and downlink subframe configurations of respective base station equipment, an interference relation graph corresponding to the mode. Candidate modes of uplink and downlink subframe configurations of base station equipment represented by each node in the interference relation graph corresponding to the mode include the mode.

According to the embodiments of the present disclosure, the electronic equipment 100 may receive candidate modes of each base station equipment from the base station equipment through the communication unit 140, and then determine a union set of candidate modes of all base station equipment, so as to determine an interference relation graph corresponding to each mode in the union set. For example, as shown in Figure 2, a union set of candidate modes of the base station equipment 1 to 10 is {1, 2, 3, 4, 5, 6, 7, 9}, so that the mode determination unit 120 may determine an interference relation graph corresponding to each mode among modes 1, 2, 3, 4, 5, 6, 7 and 9. According to the embodiments of the present disclosure, an interference relation graph corresponding to a certain mode is a part of the interference relation graph determined by the interference relation graph determination unit 110, that is, the interference relation graph corresponding to the mode includes all nodes whose candidate modes include the mode and sides between the nodes.

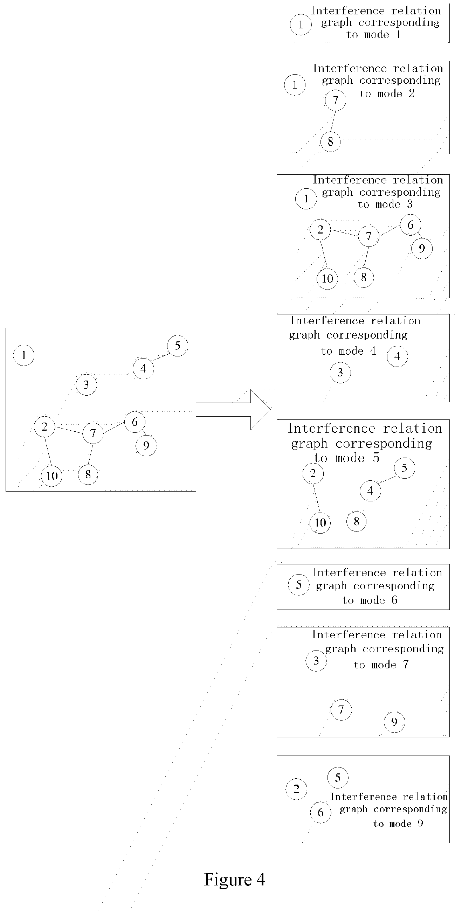

Figure 4 is a schematic diagram showing interference relation graphs corresponding to respective modes according to an embodiment of the present disclosure. As shown in Figure 4, for the mode 1, only candidate modes of the base station equipment 1 among the base station equipment 1 to 10 include the mode 1, so that the interference relation graph corresponding to the mode 1 only includes the base station equipment 1. For the mode 2, candidate modes of each of the base station equipment 1, the base station equipment 7 and the base station equipment 8 include the mode 2, so that the interference relation graph corresponding to the mode 2 includes the base station equipment 1, 7 and 8. There is a side between the base station equipment 7 and the base station equipment 8 in the interference relation graph shown in Figure 3, so that there is a side between the base station equipment 7 and the base station equipment 8 in the interference relation graph corresponding to the mode 2. The interference relation graphs respectively corresponding to modes 3, 4, 5, 6, 7 and 9 can be determined in a similar manner.

According to the embodiments of the present disclosure, the mode determination unit 120 may determine, with respect to an interference relation graph corresponding to each mode, one or more connected subgraphs in the interference relation graph. Each node in the connected subgraph is at least connected to one other node in the connected subgraph. Here candidate modes of each mode in the determined connected subgraph include the mode. Therefore, such connected subgraph may also be referred to as a connected subgraph corresponding to the mode.

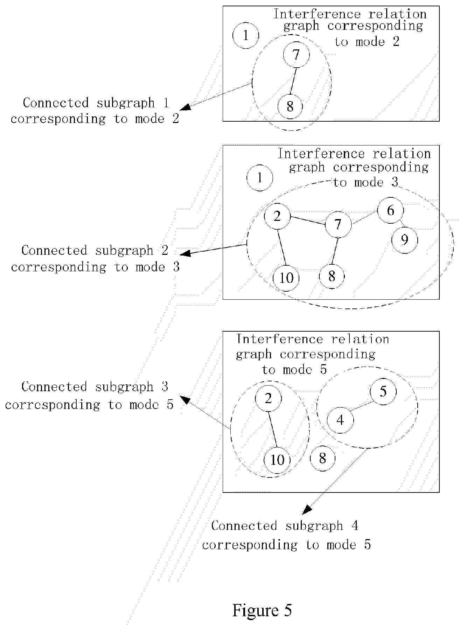

Figure 5 is a schematic diagram showing connected subgraphs corresponding to respective modes determined according to the interference relation graphs corresponding to the respective modes shown in Figure 4. As shown in Figure 5, each of modes 1, 4, 6, 7 and 9 corresponds to no connected subgraph. The mode 2 corresponds to one connected subgraph, which is numbered as connected subgraph 1 for convenience of explanation. The mode 3 corresponds to one connected subgraph, which is numbered as connected subgraph 2 for convenience of explanation. The mode 5 corresponds to two connected subgraphs, which are respectively numbered as connected subgraph 3 and connected subgraph 4 for convenience of explanation.

According to the embodiments of the present disclosure, in the process of determining the connected subgraphs corresponding to respective modes according to the interference relation graphs corresponding to the respective modes, a sequence traversal method may be used. In short, starting with a node, nodes adjacent to the node (referred to as first-layer neighboring nodes) are determined. Then nodes adjacent to the first layer of neighboring nodes (referred to as second-layer neighboring nodes) are determined in the remaining nodes. The above operations are repeated until there is no neighboring node.

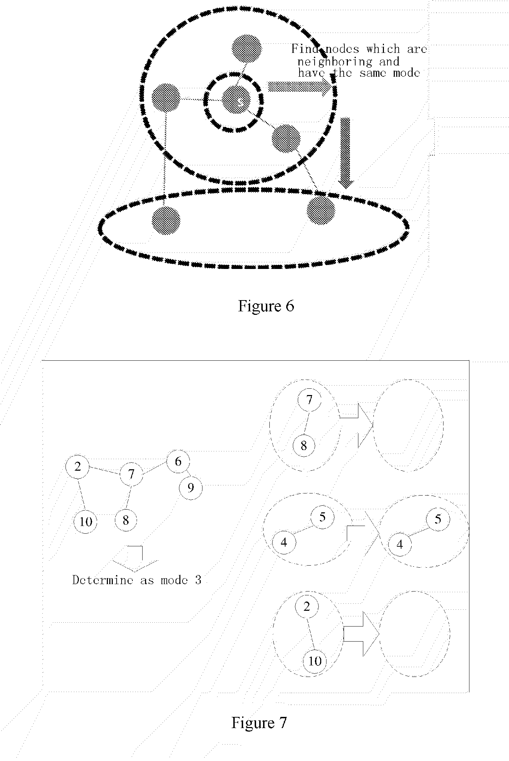

Figure 6 is a schematic diagram showing a process of determining a connected subgraph corresponding to a mode with the sequence traversal method. As shown in Figure 6, for a source node s, three first-layer neighboring nodes adjacent to the node are determined, and then two second-layer neighboring nodes adjacent to the first-layer neighboring nodes are determined.

As described above, the mode determination unit 120 may determine the interference relation graphs corresponding to respective modes according to the interference relation graph determined by the interference relation graph determination unit 110, and determine the connected subgraphs corresponding to the respective modes according to the interference relation graphs corresponding to the respective modes.

According to the embodiments of the present disclosure, in order to simplify the operation, the mode determination unit 120 may also determine one or more connected subgraphs according to the interference relation graph determined by the interference relation graph determination unit 110. Each node in the connected subgraph is at least connected to one other node in the connected subgraph. In this case, candidate modes of the nodes in the determined connected subgraph do not necessarily include the same modes. Next, with respect to each connected subgraph of the interference relation graph determined by the interference relation graph determination unit 110, the mode determination unit 120 may determine a connected subgraph corresponding to each mode with the sequence traversal method. For example, with respect to the interference relation graph shown in Figure 3, the mode determination unit 120 may determine two connected subgraphs. One of the two connected subgraphs includes nodes 4 and 5, and the other of the two connected subgraphs includes nodes 2, 6, 7, 8, 9 and 10. With respect to each of the two connected subgraphs, the mode determination unit 120 may determine a connected subgraph corresponding to each mode among modes 1, 2, 3, 4, 5, 6, 7 and 9.

According to the embodiments of the present disclosure, for any connected subgraph and any mode of the interference relation graph determined by the interference relation graph determination unit 110, the mode determination unit 120 may perform the following steps (in the connected subgraph, a set of base station equipment whose candidate modes include the mode is represented by Se, and As represents a set of neighboring base station equipment of the node s).

In step (1), any node s is selected from Se, and As and $S_e$ are intersected to obtain an intersection Cs.

In step (2), the node s and nodes in the set $C_s$ are added to a connected subgraph $G_s$ corresponding to the mode, where the nodes in $G_s$ are in a form of first in first out, and then the nodes in $G_s$ are removed from Se.

In step (3), a head node h is taken out from $G_s$. $A_h$ and $S_e$ are intersected to obtain an intersection $C_h$. $C_h$ is added to $G_S$, and then nodes in $C_h$ are removed from Se.

In step (4), if a queue in $G_s$ is not empty, step (3) is performed. If a queue in $G_s$ is empty, $G_s$ is outputted as the connected subgraph corresponding to the mode, and then step (1) is performed.

As described above, for any connected subgraph and any mode of the interference relation graph determined by the interference relation graph determination unit 110, the mode determination unit 120 searches for, starting from any node, nodes that are adjacent to the node and have the same mode (the first-layer neighboring nodes), and then searches for nodes that are adjacent to the first-layer neighboring nodes and have the same mode (the second-layer neighboring nodes) in remaining nodes. The above operations are repeated, and thus the connected subgraphs corresponding to the mode are determined. In this way, the mode determination unit 120 determines connected subgraphs corresponding to each mode.

According to the embodiments of the present disclosure, after the mode determination unit 120 determines connected subgraphs corresponding to respective modes, the mode determination unit 120 may determine a mode of uplink and downlink subframe configurations of each base station equipment according to respective connected subgraphs corresponding to respective modes and one or more isolated nodes. Here, the isolated node refers to a node that is not in any connected subgraph, that is, the node is not connected to other nodes. Figure 5 shows four connected subgraphs, each of which does not include node 1 and node 3, so that the node 1 and the node 3 are isolated nodes.

According to the embodiments of the present disclosure, the mode determination unit 120 may configure modes for the respective base station equipment by performing: a. taking, as multiple connected subgraphs which are initial, the respective connected subgraphs corresponding to the respective modes; b. selecting one or more connected subgraphs from the multiple connected subgraphs, and determining, as a mode corresponding to the selected connected subgraphs, modes of uplink and downlink subframe configurations of base station equipment represented by nodes in the selected connected subgraphs; c. removing, from connected subgraphs other than the selected connected subgraphs among the multiple connected subgraphs, the nodes in the selected connected subgraphs, to generate multiple connected subgraphs which are updated; and d. repeatedly performing the steps b and c until an absence of connected subgraphs.

According to the embodiments of the present disclosure, in step a, the respective connected subgraphs corresponding to the respective modes refer to all connected subgraphs corresponding to the modes determined by the mode determination unit 120 in a manner described above. For example, taking Figure 5 as an example, the multiple initial connected subgraphs refer to the connected subgraph 1 corresponding to the mode 2, the connected subgraph 2 corresponding to the mode 3, the connected subgraph 3 corresponding to the mode 5, and the connected subgraph 4 corresponding to the mode 5.

According to the embodiments of the present disclosure, in step b, the mode determination unit 120 may select one or more connected subgraphs from the multiple connected subgraphs according to a node number of a connected subgraph or a throughput of a connected subgraph. For example, the mode determination unit 120 may select a connected subgraph with a largest node number from the multiple connected subgraphs. As another example, the mode determination unit 120 may select a connected subgraph with a largest throughput from the multiple connected subgraphs.

According to the embodiments of the present disclosure, the throughput of the connected subgraph represents a product of a node number of the connected subgraph and a throughput of a mode corresponding to the connected subgraph. That is, the throughput of the connected subgraph represents a sum of throughputs of all nodes in the connected subgraph. Each mode corresponds to one throughput, that is, a throughput of a node depends on a mode of the node. For example, if a mode M corresponds to a throughput T and a connected subgraph corresponding to the mode M includes 4 nodes, the throughput of each node is T and the throughput of the connected subgraph is 4T.

According to the embodiments of the present disclosure, the mode determination unit 120 may also select two connected subgraphs with a largest sum of node numbers from the multiple connected subgraphs. In this embodiment, the mode determination unit 120 may perform the following operations. Two connected subgraphs $A_m$ and $B_m$ with the largest mode numbers are selected from the multiple connected subgraphs. With respect to the connected subgraph $A_m$, nodes in the connected subgraph $A_m$ are removed from remaining connected subgraphs. In this case, some connected subgraphs may split. A connected subgraph $C_m$ with a largest node number is selected from new connected subgraphs. Similarly, with respect to the connected subgraph $B_m$, nodes in the connected subgraph $B_m$ are removed from the remaining connected subgraphs. In this case, some connected subgraphs may split. A connected subgraph $D_m$ with a largest node number is selected from new connected subgraphs. If Am+Cm>Bm+Dm, the connected subgraph $A_m$ and the connected subgraph Cm are selected, otherwise the connected subgraph $B_m$ and the connected subgraph $D_m$ are selected.

According to the embodiments of the present disclosure, in step b, the mode determination unit 120 selects one or more connected subgraphs from the multiple connected subgraphs, and determines modes of the base station equipment represented by the nodes in the selected connected subgraph as the mode corresponding to the selected connected subgraph. Here, take a case where the mode determination unit 120 selects the connected subgraph with the largest node number as an example. Among the four connected subgraphs shown in Figure 5, the connected subgraph with the largest node number is the connected subgraph 2 corresponding to the mode 3, so that the mode determination unit 120 may determine the modes of the nodes in the connected subgraph 2 as the mode 3. That is, the modes of base station equipment 2, 6, 7, 8, 9 and 10 are determined as the mode 3.

According to the embodiments of the present disclosure, in step c, the mode determination unit 120 may remove, from connected subgraphs other than the selected connected subgraphs among the multiple connected subgraphs, the nodes in the selected connected subgraphs, to generate multiple connected subgraphs which are updated. That is, the mode determination unit 120 removes the nodes whose modes are determined from other connected subgraphs.

Figure 7 is a schematic diagram showing changes of other connected subgraphs after modes of nodes in the connected subgraph 2 corresponding to the mode 3 are determined as the mode 3 according to an embodiment of the present disclosure. As shown in Figure 7, after modes of base station equipment 2, 6, 7, 8, 9 and 10 are determined as the mode 3, these nodes are removed from other connected subgraphs, so that there is no node in the connected subgraph 1 and in the connected subgraph 3, and the connected subgraph 4 remains unchanged. Therefore, multiple connected subgraphs which are updated only include the connected subgraph 4.

According to the embodiments of the present disclosure, in step d, steps b and c are repeatedly performed until an absence of connected subgraphs. That is, the mode determination unit 120 selects one or more connected subgraphs from multiple connected subgraphs which are updated and determines modes of nodes in the selected connected subgraph as the mode corresponding to the connected subgraph. Here, since only the connected subgraph 4 is left, the mode determination unit 120 selects the connected subgraph 4 and determines modes of the base station equipment 4 and the base station equipment 5 in the connected subgraph 4 as the mode 5.

As described above, after steps a, b, c and d, the mode determination unit 120 determines modes of the base station equipment 2, 6, 7, 8, 9 and 10 as the mode 3 and determines modes of the base station equipment 4 and 5 as the mode 5. Steps b, c and d are descried above by taking a case where the connected subgraph with the largest node number is selected as an example. A process of selecting a connected subgraph based on other principles is similar.

According to the embodiments of the present disclosure, modes may be determined in a unit of the connected subgraph for each mode. Since there is interference between a node in a connected subgraph and at least one other node in the connected subgraph, determining the modes in the unit of connected subgraph causes nodes in a connected subgraph have the same mode as much as possible, so that the interference between the nodes in the connected subgraph is avoided. Further, for an determining order, the mode determination unit 120 may determine the order of the connected subgraphs according to the node number, so that the base station equipment have the same mode as much as possible. The mode determination unit 120 may also determine the order of the connected subgraphs according to the throughput, so as to meet the mode of the connected subgraph with large throughput as much as possible. In short, according to the embodiments of the present disclosure, interference between nodes caused by difference of modes can be avoided as much as possible.

According to the embodiments of the present disclosure, after the above steps, a node for which a mode has not yet been determined is referred to as an isolated node. For example, in the embodiments described above, the isolated nodes include the base station equipment 1 and the base station equipment 3. With respect to these isolated nodes, the mode determination unit 120 may randomly select a mode from candidate modes of uplink and downlink subframe configurations of base station equipment represented by the isolated node. For example, candidate modes of the base station equipment 1 include the modes 1, 2 and 3, and the mode determination unit 120 may randomly select the mode 2 as the mode of the base station equipment 1. The mode determination unit 120 may also select a mode with a largest throughput from the candidate modes of uplink and downlink subframe configurations of the base station equipment represented by the isolated node. For example, the candidate modes of the base station equipment 1 include mode 1, 2 and 3. Assuming that the mode 1 has the largest throughput, the mode determination unit 120 may select the mode 1 as the mode of the base station equipment 1. The mode determination unit 120 may also select, from candidate modes of uplink and downlink subframe configurations of base station equipment represented by the isolated node, a mode of uplink and downlink subframe configurations which is identical to that of base station equipment represented by another isolated node. For example, assuming that the candidate modes of the isolated node P include modes 1 and 2 and the candidate modes of the isolated node Q include modes 2 and 3, the mode determination unit 120 may determine modes of the isolated node P and the isolated node Q as the mode 2, so as to reduce the number of modes in all base station equipment. The embodiment in which the mode determination unit 120 determines the mode for the isolated node is described above in a nonrestrictive manner. The mode determination unit 120 may also determine the mode for the isolated node according to other parameters of the isolated node.

According to the embodiments of the present disclosure, for all isolated nodes whose modes have not been determined, the mode determination unit 120 may also determine an order of determining modes for the isolated nodes. For example, the mode determination unit 120 may determine priority of determining modes of uplink and downlink subframe configurations for the base station equipment represented by the isolated nodes according to degrees of the isolated nodes. A degree of an isolated node represents the number of nodes in the interference relation graph determined by the interference relation graph determination unit 110 that are adjacent to the isolated node and whose modes of uplink and downlink subframe configurations have not been determined. A large degree corresponds to a high priority, and the mode determination unit 120 may determine the modes of the isolated nodes in a descending order of priority.

The mode determination unit 120 according to the embodiments of the present disclosure is described in detail above. The mode determination unit 120 determines the modes of uplink and downlink subframe configurations for respective base station equipment in the predetermined region.

According to the embodiments of the present disclosure, after the mode determination unit 120 determines the modes of respective base station equipment, the electronic equipment 100 may update the matrix. For example, the interference between any two base station equipment is determined according to the determined modes of the respective base station equipment, and then the value of $T_{ij}$ is updated. In a case that modes of the base station equipment i and the base station equipment j are the same, $T_{ij}$ is equal to 0. In a case that the modes of the base station equipment i and base station equipment j are different, $T_{ij}$ is equal to 1. Further, the value of $T_{ii}$ is updated according to the modes of the base station equipment i, to cause $T_{ii}$ to be equal to the number of the mode of the base station equipment i.

As described above, according to the embodiments of the present disclosure, the interference relation graph may be stored and represented using a matrix. In an embodiment, the electronic equipment 100 may transmit the matrix to the respective base station equipment when needed.

The transmission time determination unit 130 according to the embodiment of the present disclosure is described in detail below.

According to the embodiments of the present disclosure, the transmission time determination unit 130 may determine a transmission ratio of each base station equipment according to a mode of uplink and downlink subframe configurations of the base station equipment. The transmission ratio represents a ratio occupied by a transmission time period of the base station equipment in a reference time period.

According to the embodiments of the present disclosure, for a base station equipment whose neighboring base station equipment have the same mode of uplink and downlink subframe configurations, the transmission ratio of the base station equipment is determined as 1. That is, if neighboring base station equipment of a certain base station equipment have the same mode as the certain base station equipment, there is no interference between the certain base station equipment and the neighboring base station equipment of the certain base station equipment, and the certain base station equipment may transmit information at any time.

According to the embodiments of the present disclosure, for a base station equipment whose neighboring base station equipment have different modes of uplink and downlink subframe configurations, the transmission ratio of the base station equipment is determined to be less than 1. That is, if in neighboring base station equipment of a certain base station equipment, there is base station equipment with a mode different from that of the certain base station equipment, the transmission ratio of the certain base station equipment is less than 1.

According to the embodiments of the present disclosure, the electronic equipment 100 may set the reference time period as needed. The reference time period may be one or more frames, which is not limited in the present disclosure. A range of the transmission ratio is (0.1]. For example, in a case where the transmission ratio is equal to 0.5, it indicates that data may be transmitted within a half of the reference time period.

According to the embodiments of the present disclosure, with respect to base station equipment whose neighboring base station equipment have different modes of uplink and downlink subframe configurations, the transmission time determination unit 130 may determine the transmission ratio of the base station equipment with a linear programming method.

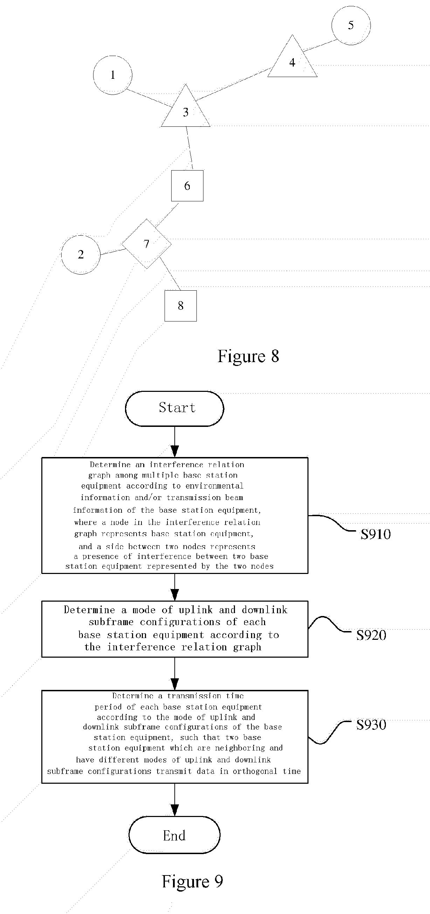

Figure 8 exemplary shows the interference relation graph after modes of uplink and downlink subframe configurations of all base station equipment are determined. In Figure 8, 1 to 8 represent serial numbers of the base station equipment or nodes, and a shape of a node represents a mode of the node. That is, modes of nodes 1, 2 and 5 are the same, modes of nodes 3 and 4 are the same, modes of nodes 6 and 8 are the same, and the mode of node 7 is different from modes of other nodes. It should be noted that Figure 8 is independent of the example shown above, that is, the modes of the nodes in Figure 8 are not determined based on the example shown in Figure 3. As shown in Figure 8, each node has a neighboring node with a mode different from that of the node, so that the transmission ratio of each of the nodes 1 to 8 is less than 1.

According to the embodiments of the present disclosure, the transmission time determination unit 130 may determine a target function according to transmission ratios of the respective base station equipment whose neighboring base station equipment have different modes and throughputs of modes of the respective base station equipment. Specifically, the target function may be expressed as a sum of products of a transmission ratio and a throughput of each node whose transmission ratio is less than 1, as shown in the following equation:

$$\sum_{j=1}^{N} p_j\, S_j$$

In the above equation, N represents the number of nodes whose transmission ratios are required to be determined, that is, the number of nodes whose transmission ratios are less than 1. Pj represents the transmission ratio of a (j)th node, that is, a parameter to be solved. Sj represents the throughput of the (j)th node, which is determined according to the mode of the node. $j \in [1, N]$.

According to the embodiments of the present disclosure, the transmission time determination unit 130 may determine a constraint condition: a sum of transmission ratios of two base station equipment which are neighboring and have different modes not greater than 1, as shown in the following equation:

$$p_j + p_{j_1} \le 1, \quad p_j + p_{j_2} \le 1, \quad \cdots, \quad p_j + p_{j_{u_j}} \le 1$$

In the above equation, $\mu_j$ represents the number of base station equipment which are adjacent to the (j)th node and have different modes. $p_{j1}$ represents a transmission ratio of a first base station equipment which is adjacent to the (j)th node and has a different mode, $p_{j2}$ represents a transmission ratio of a second base station equipment which is adjacent to the (j)th node and has a different mode, ..., and $p_{j\mu j}$ represents a transmission ratio of a $(\mu_j)$th base station equipment which is adjacent to the (j)th node and has a different mode.

In the example shown in Figure 8, the constraint condition may be expressed as the following equation:

$$p_1 + p_3 \le 1, \quad p_3 + p_6 \le 1, \quad p_4 + p_5 \le 1, \quad p_6 + p_7 \le 1, \quad p_7 + p_2 \le 1, \quad p_7 + p_8 \le 1$$

According to the embodiments of the present disclosure, the transmission time determination unit 130 may further determine an additional constraint condition according to a fairness principle to cause the transmission ratio of the node as great as possible. For example, the transmission ratio of a node should be greater than or equal to a reciprocal of a sum of the number of base station equipment which are adjacent to the node and have different modes and 1. That is, if there is only one node which is adjacent to the node and has a different mode, the transmission ratio of the node should be greater than or equal to 0.5. This constraint condition is expressed as:

$$-\text{p}_j \le -1/(1 + u_j)$$

In the example shown in Figure 8, the constraint condition may be expressed as the following equations:

$$-\text{p}_1 \le -1/2, \ -\text{p}_2 \le -1/2, \ -\text{p}_3 \le -1/3, \ -\text{p}_4 \le -1/2,$$

$$-\text{p}_5 \le -1/2, \ -\text{p}_6 \le -1/3, \ -\text{p}_7 \le -1/3, \ -\text{p}_8 \le -1/2$$

and

According to the embodiments of the present disclosure, the transmission time determination unit 130 may determine each pj that maximizes the target function under the constraints of the above constraint condition, where $j \in [1, N]$, and thus the transmission ratios of respective nodes are determined.

According to the embodiments of the present disclosure, in the example shown in Figure 8, the transmission time determination unit 130 may determine the transmission ratios of the respective nodes are: pi=0.50, $p_2$=0.50, $p_3$=0.33, $p_4$=0.50, $p_5$=0.50, $p_6$=0.33, $p_7$=0.33, and $p_8$=0.5.

According to the embodiments of the present disclosure, the transmission time determination unit 130 may determine a transmission time period of each base station equipment according to the transmission ratio of the base station equipment, so that two base station equipment which are neighboring and have different modes of uplink and downlink subframe configurations transmit data at orthogonal time. That is, the transmission time determination unit 130 may determine start time and end time of the transmission time period of the base station equipment in the reference time period according to the transmission ratio of the base station equipment. A manner in which the transmission time period is set is not limited in the present disclosure as long as transmission time periods of two base station equipment which are neighboring and have different modes of uplink and downlink subframe configurations are orthogonal, that is, not overlapped. For example, in a case where pi=0.50, $p_3$=0.33 and the base station equipment 1 and the base station equipment 3 have different modes, the transmission time determination unit 130 may determine that the base station equipment 1 transmits data in the first 0.5 part of the reference time period and the base station equipment 2 transmits data in the last 0.33 part of the reference time period.

As described above, according to the embodiments of the present disclosure, the transmission time determination unit 130 may determine the transmission time periods of the respective base station equipment with a linear programming method, so that the transmission time periods of the base station equipment which are neighboring and have different modes are orthogonal.

According to the embodiments of the present disclosure, after the mode determination unit 120 determines the modes of the respective base station equipment and the transmission time determination unit 130 determines the transmission time periods of the respective base station equipment, the electronic equipment 100 may transmit, to each base station equipment, a mode of uplink and downlink subframe configuration of the base station equipment and a transmission time period of the base station equipment through the communication unit 140. For example, the mode may include a serial number of the mode. The transmission time period may include start time and end time of the transmission time period of the base station equipment within the reference time period, or include the start time and a transmission ratio of the transmission time period of the base station equipment within the reference time period.

According to the embodiments of the present disclosure, the transmission time determination unit 130 may determine the transmission time period of each base station equipment according to the mode of the base station equipment determined by the mode determination unit 120. That is, the present disclosure is applicable to a scenario in which an operator planes to put a certain number of base station equipment in a predetermined region. In an embodiment, transmission modes of respective base station device may be determined in advance, and the transmission time determination unit 130 determines the transmission time periods of the respective base station equipment according to the determined modes of the base station equipment. In other words, the present disclosure is also applicable to a scenario in which some base station equipment whose modes are determined already exist in a current network.

According to the embodiments of the present disclosure, after the transmission time determination unit 130 determines the transmission time periods of the respective base station equipment, if a certain base station equipment is still interfered, the base station equipment transmits information indicating that the base station equipment is interfered to the electronic equipment 100, which occurs in, for example, a case where a mode of the base station equipment changes, a case where a position of the base station equipment changes, a case where an environment of the base station equipment changes, and the like. The electronic equipment 100 may re-perform the processes described above on the base station equipment and the neighboring base station equipment of the base station equipment, that is, determine a mode for each of the interfered base station equipment and the neighboring adjacent base station equipment of the interfered base station equipment, and determine a transmission time period for each of the interfered base station equipment and the neighboring adjacent base station equipment of the interfered base station equipment. That is, the electronic equipment 100 may receive information indicating that the base station equipment is interfered from the base station equipment, re-determine an interference relation graph among the base station equipment and neighboring base station equipment of the base station equipment according to environmental information and/or transmission beam information of each of the base station equipment and the adjacent base station equipment of the base station equipment; determine a mode of uplink and downlink subframe configurations of each base station equipment according to the re-determined interference relation graph; and determine a transmission time period of each base station equipment according to the mode of uplink and downlink subframe configurations of the base station equipment, so that two base station equipment which are neighboring and have different modes of uplink and downlink subframe configurations transmit data in orthogonal time. In other words, the electronic equipment 100 may perform operations in the manner described above, and the operations are performed on the interfered base station equipment and the neighboring base station equipment of the interfered base station equipment.

According to the embodiments of the present disclosure, in a case where a certain base station equipment is still disturbed, the electronic equipment 100 may also re-perform the above processes on all base station equipment.

It can be seen that according to the embodiments of the present disclosure, the electronic equipment 100 may determine modes in the unit of connected subgraph with respect to each mode according to the interference relation graph among multiple base station equipment, so that nodes in a same connected subgraph have the same mode, thereby avoiding the interference between nodes which are neighboring and have different modes as far as possible. Further, if there are still nodes which are neighboring and have different modes in determining the modes, the electronic equipment 100 may determine transmission time periods of respective nodes with the linear programming method, so that the transmission time periods of base station equipment which are neighboring and have different modes are orthogonal, thereby avoiding interference. In short, with the electronic equipment 100 according to the present disclosure, the interference caused by difference of modes of multiple base station equipment can be effectively reduced.

<3. Method Embodiment

Next, the wireless communication method performed by the electronic equipment 100 in a wireless communication system according to the embodiments of the present disclosure is described in detail.

Figure 9 is a flowchart of the wireless communication method performed by the electronic equipment 100 in a wireless communication system according to an embodiment of the present disclosure.

As shown in Figure 9, in step S910, an interference relation graph among multiple base station equipment is determined according to environmental information and/or transmission beam information of the base station equipment. A node in the interference relation graph represents base station equipment, and a side between two nodes represents a presence of interference between two base station equipment represented by the two nodes.

Next, in step S920, a mode of uplink and downlink subframe configurations of each base station equipment is determined according to the interference relation graph.

Next, in step S930, a transmission time period of each base station equipment is determined according to the mode of uplink and downlink subframe configurations of the base station equipment, such that two base station equipment which are neighboring and have different modes of uplink and downlink subframe configurations transmit data in orthogonal time.

Preferably, the wireless communication method further includes: receiving, from base station equipment, information indicating that the base station equipment is interfered; re-determining an interference relation graph among the base station equipment and neighboring base station equipment of the base station equipment according to environmental information and/or transmission beam information of each of the base station equipment and the adjacent base station equipment of the base station equipment; determining a mode of uplink and downlink subframe configurations of each base station equipment according to the re-determined interference relation graph; and determining a transmission time period of each base station equipment according to the mode of uplink and downlink subframe configurations of the base station equipment, so that two base station equipment which are neighboring and have different modes of uplink and downlink subframe configurations transmit data in orthogonal time.

Preferably, the wireless communication method further includes: determining, in a case where one of two base station equipment is located in an indoor environment and the other of the two base station equipment is located in an outdoor environment, an absence of interference between the two base station equipment.

Preferably, the wireless communication method further includes: determining, in a case where a transmit beam direction of one of two base station equipment is away from the other of the two base station equipment and where a transmit beam direction of the other of the two base station equipment is away from the one of the two base station equipment, an absence of interference between the two base station equipment.

Preferably, the wireless communication method further includes: determining whether there is interference between base station equipment according to position information and transmission power information of the base station equipment, and frequency domain resources used by the base station equipment.

Preferably, the determining whether there is interference between two base station equipment includes: determining, in a case where frequency domain resources used by two base station equipment are identical or neighboring, a signal to interference plus noise ratio according to position information and transmission power information of the two base station equipment; and determining, in a case where the signal to interference plus noise ratio is less than a predetermined threshold, a presence of interference between the two base station equipment.

Preferably, the determining a mode of uplink and downlink subframe configurations of each base station equipment includes: determining, with respect to each mode of one or more candidate modes of uplink and downlink subframe configurations of respective base station equipment, an interference relation graph corresponding to the mode, where candidate modes of uplink and downlink subframe configurations of base station equipment represented by each node in the interference relation graph corresponding to the mode include the mode; determining, with respect to an interference relation graph corresponding to each mode, one or more connected subgraphs in the interference relation graph, where each node in the connected subgraph is at least connected to one other node in the connected subgraph; and determining a mode of uplink and downlink subframe configurations of each base station equipment according to respective connected subgraphs corresponding to respective modes and one or more isolated nodes.

Preferably, the determining a mode of uplink and downlink subframe configurations of each base station equipment includes: a. taking, as multiple connected subgraphs which are initial, the respective connected subgraphs corresponding to the respective modes; b. selecting one or more connected subgraphs from the multiple connected subgraphs, and determining, as a mode corresponding to the selected connected subgraphs, modes of uplink and downlink subframe configurations of base station equipment represented by nodes in the selected connected subgraphs; c. removing, from connected subgraphs other than the selected connected subgraphs among the multiple connected subgraphs, the nodes in the selected connected subgraphs, to generate multiple connected subgraphs which are updated; and d. repeatedly performing the steps b and c until an absence of connected subgraphs.

Preferably, the selecting one or more connected subgraphs from the multiple connected subgraphs includes: selecting one or more connected subgraphs from the multiple connected subgraphs according to a node number of a connected subgraph or a throughput of a connected subgraph. The throughput of the connected subgraph represents a product of a node number of the connected subgraph and a throughput of a mode corresponding to the connected subgraph.

Preferably, the determining a mode of uplink and downlink subframe configurations of each base station equipment includes: determine, with respect to each isolated node of one or more isolated nodes for which modes of uplink and downlink subframe configurations have not yet been determined, a mode of uplink and downlink subframe configurations for base station equipment represented by the isolated node according to one of the principles of: randomly selecting a mode from candidate modes of uplink and downlink subframe configurations of base station equipment represented by the isolated node; selecting a mode with a largest throughput from candidate modes of uplink and downlink subframe configurations of base station equipment represented by the isolated node; and selecting, from candidate modes of uplink and downlink subframe configurations of base station equipment represented by the isolated node, a mode of uplink and downlink subframe configurations which is identical to that of base station equipment represented by another isolated node.

Preferably, the determining a mode of uplink and downlink subframe configurations of each base station equipment includes: determine priority of determining modes of uplink and downlink subframe configurations for the base station equipment represented by the isolated nodes according to degrees of the isolated nodes. A degree of an isolated node represents the number of nodes in the interference relation graph that are adjacent to the isolated node and whose modes of uplink and downlink subframe configurations have not been determined.

Preferably, the determining a transmission time period of each base station equipment includes: determining a transmission ratio of each base station equipment according to a mode of uplink and downlink subframe configurations of the base station equipment, where the transmission ratio represents a ratio occupied by a transmission time period of the base station equipment in a reference time period; and determining a transmission time period of each base station equipment according to the transmission ratio of the base station equipment, such that two base station equipment which are neighboring and have different modes of uplink and downlink subframe configurations transmit data in orthogonal time.

Preferably, the determining a transmission ratio of each base station equipment includes: determining, for a base station equipment whose neighboring base station equipment have the same mode of uplink and downlink subframe configurations, the transmission ratio of the base station equipment as 1; and determining, for a base station equipment whose neighboring base station equipment have different modes of uplink and downlink subframe configurations, the transmission ratio of the base station equipment to be less than 1.

Preferably, the determining a transmission ratio of each base station equipment includes: determining, with respect to base station equipment whose neighboring base station equipment have different modes of uplink and downlink subframe configurations, the transmission ratio of the base station equipment with a linear programming method. A target function is determined according to transmission ratios of the respective base station equipment whose neighboring base station equipment have different modes of uplink and downlink subframe configurations and throughputs of modes of uplink and downlink subframe configurations of the respective base station equipment. In addition, a constraint condition includes: a sum of transmission ratios of two base station equipment which are neighboring and have different modes of uplink and downlink subframe configurations not greater than 1.

Preferably, the wireless communication method further includes: transmitting, to each base station equipment, the mode of uplink and downlink subframe configurations of the base station equipment and the transmission time period of the base station equipment.

According to the embodiments of the present disclosure, the method may be performed by the electronic equipment 100 according to the embodiments of the present disclosure. Therefore, all previous embodiments of the electronic equipment 100 are applicable to the method herein.

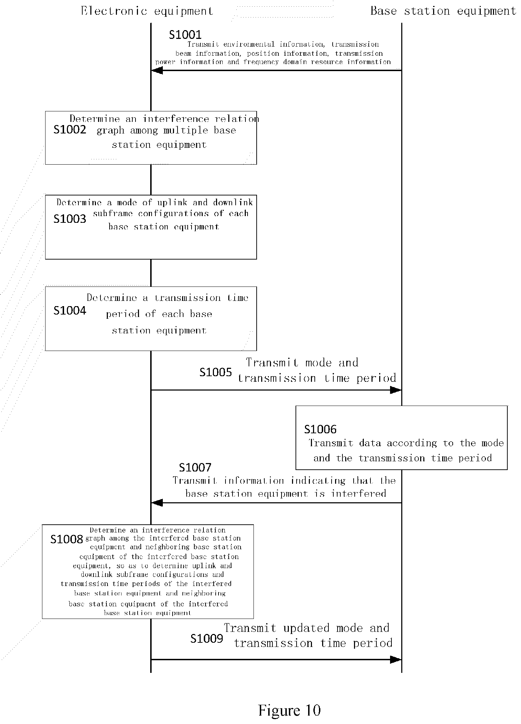

Figure 10 is a flowchart of determining a mode of uplink and downlink subframe configurations and a transmission time period of base station equipment according to an embodiment of the present disclosure. In Figure 10, the electronic equipment may be implemented by the electronic equipment 100 described above. In step S1001, the base station equipment transmits at least one of the following information to the electronic equipment: environmental information, transmission beam information, position information, transmission power information and used frequency domain resource information. Next, in step S1002, after collecting the information of the multiple base station equipment, the electronic equipment determines an interference relation graph among the multiple base station equipment according to the information of the multiple base station equipment. Next, in step S1003, the electronic equipment determines a mode of uplink and downlink subframe configurations of each base station equipment according to the interference relation graph, so that neighboring base station equipment in the interference relation graph have the same mode as much as possible. Next, in step S1004, the electronic equipment determines a transmission time period of each base station equipment, so that the base station equipment in the interference relation graph which are neighboring and have different modes perform uplink and downlink transmission in an alternating silent manner. Next, in step S1005, the electronic equipment transmits to each base station equipment the mode and the transmission time period configured for the base station equipment. Next, in step S1006, each base station equipment transmits data according to the mode and the transmission time period of the base station equipment. If the base station equipment is still interfered during operation, in step S1007, the base station equipment may transmit information indicating that the base station equipment is interfered to the electronic equipment. Next, in step S1008, the electronic equipment may re-perform steps S1002, S1003 and S1004 on the interfered base station equipment and base station equipment surrounding the interfered base station equipment, that is, determine an interference relation graph among the interfered base station equipment and the base station equipment surrounding the interfered base station equipment, determine uplink and downlink subframe configurations of the interfered base station equipment and the base station equipment surrounding the interfered base station equipment, and determine transmission time periods of the interfered base station equipment and the base station equipment surrounding the interfered base station equipment. Next, in step S1009, the electronic equipment transmits the updated mode and transmission time period to corresponding base station equipment. In this way, the electronic equipment properly configures the mode and transmission time period for each base station equipment.

Figure 10 shows an example in which the electronic equipment configures modes and transmission time periods for the base station equipment. For multiple base station equipment whose modes have been configured, the electronic equipment may directly perform step S1004 to determine the transmission time periods for respective base station equipment according to the modes of the respective base station equipment, and transmit the determined transmission time periods to the respective base station equipment.

<4. Application Example>

The technology disclosed in the present disclosure is applicable to various products. For example, the electronic equipment 100 may be implemented as any type of server, such as a tower server, a rack server, and a blade server. The electronic equipment 100 may be a control module (such as an integrated circuit module including a single chip, and a card or blade inserted into a slot of a blade server) mounted on the server.

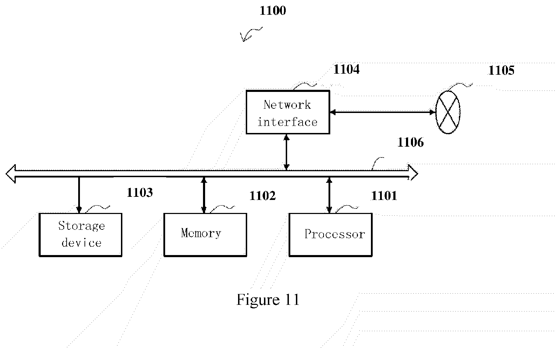

Figure 11 is a block diagram showing an example of a server 1100 implemented as the electronic equipment 100 according to the present disclosure. The server 1100 includes a processor 1101, a memory 1102, a storage device 1103, a network interface 1104, and a bus 1106.

The processor 1101 may be, for example, a central processing unit (CPU) or a digital signal processor (DSP), and controls functions of the server 1100. The memory 1102 includes a random access memory (RAM) and a read only memory (ROM), and stores data and a program executed by the processor 1101. The storage device 1103 may include a storage medium, such as a semiconductor memory and a hard disk.

The network interface 1104 is a wired communication interface for connecting the server 1100 to the wired communication network 1105. The wired communication network 1105 may be a core network such as an evolved packet core (EPC) network or a packet data network (PDN) such as the Internet.

The bus 1106 connects the processor 1101, the memory 1102, the storage device 1103 and the network interface 1104 to each other. The bus 1106 may include two or more buses (such as a high-speed bus and a low-speed bus) that have different speeds.

In the server 1100 shown in Figure 11, the interference relation graph determination unit 110, the mode determination unit 120 and the transmission time determination unit 130 described in Figure 1 may be implemented by the processor 1101, and the communication unit 140 described in Figure 1 may be implemented by the network interface 1104. For example, the processor 1101 may determine the interference relation graph, determine the uplink and downlink subframe configurations of respective base station equipment, and determine the transmission time periods of the respective base station equipment by executing the instructions stored in the memory 1102 or the storage device 1103.

Preferred embodiments of the present disclosure are described above with reference to the drawings. However, the present disclosure is not limited to the above examples. Those skilled in the art may obtain various modifications and changes within the scope of the appended claims. It should understand that these modifications and changes fall within the technical scope of the present disclosure.

For example, a unit shown with a dashed-line block in functional block diagrams shown in the drawings is optional in a corresponding device. Further, optional functional units may be combined in a suitable manner to achieve required functions.

For example, in the above embodiments, multiple functions included in one unit may be achieved by separate apparatuses. Alternately, in the above embodiments, multiple functions achieved by multiple units may be achieved by separate apparatuses. In addition, one of the above functions may be achieved by multiple units. These configurations should be included in the technical scope of the present disclosure.

In this specification, the steps described in the flowcharts include not only processing performed in time series in the described order but also processing performed in parallel or individually instead of in time series. In addition, the steps performed in time series may be performed in a different order.

Although the embodiments of the present disclosure are described above in detail with reference to the drawings, it should be understood that the above-described embodiments are merely used for illustrating the present disclosure rather than intended to limit the present disclosure. Those skilled in the art can make various modifications and variations to the above-described embodiments without departing from the substance and scope of the present disclosure. Therefore, the scope of the present disclosure is defined only by the appended claims and their equivalents.

**Claims**

1. Electronic equipment, comprising processing circuitry configured to:

    determine an interference relation graph among a plurality of base station equipment according to environmental information and/or transmission beam information of each base station equipment of the plurality of base station equipment, wherein a node in the interference relation graph represents base station equipment, a side between two nodes represents a presence of interference between two base station equipment represented by the two nodes;

    determine a mode of uplink and downlink subframe configurations of each base station equipment according to the interference relation graph; and

    determine a transmission time period of each base station equipment according to the mode of uplink and downlink subframe configurations of each base station equipment, such that transmission time periods of two base station equipment which are neighboring and have different modes of uplink and downlink subframe configurations are not overlapped.

2. The electronic equipment according to claim 1, wherein the processing circuitry is further configured to:

    receive, from base station equipment, information representing that the base station equipment suffers from interference;

    determine an updated interference relation graph among the base station equipment and neighboring base station equipment of the base station equipment according to environmental information and/or transmission beam information of each of the base station equipment and the neighboring base station equipment of the base station equipment;

    determine a mode of uplink and downlink subframe configurations of each base station equipment according to the updated interference relation graph; and

    determine a transmission time period of each base station equipment according to the mode of uplink and downlink subframe configurations of each base station equipment, such that transmission time periods of two base station equipment which are neighboring and have different modes of uplink and downlink subframe configurations are not overlapped.

3. The electronic equipment according to claim 1, wherein the processing circuitry is further configured to: determine an absence of interference between two base station equipment, in a case where one base station equipment of the two base station equipment is located in an indoor environment and the other base station equipment is located in an outdoor environment.

4. The electronic equipment according to claim 1, wherein the processing circuitry is further configured to: determine an absence of interference between two base station equipment, in a case where a transmit beam direction of one base station equipment of the two base station equipment is away from the other base station equipment and where a transmit beam direction of the other base station equipment is away from the one base station equipment.

5. The electronic equipment according to claim 1, wherein the processing circuitry is further configured to:

    determine a signal to interference plus noise ratio according to position information and transmission power information of two base station equipment, in a case where frequency domain resources used by the two base station equipment are identical or neighboring; and

    determine a presence of interference between the two base station equipment, in a case where the signal to interference plus noise ratio is less than a predetermined threshold.

6. The electronic equipment according to claim 1, wherein the processing circuitry is further configured to:

    determine, with respect to each mode of one or more candidate modes of uplink and downlink subframe configurations of respective base station equipment, an interference relation graph corresponding to the mode, wherein the interference relation graph corresponding to the mode comprises base station equipment whose candidate modes of uplink and downlink subframe configurations include the mode;

    determine, with respect to an interference relation graph corresponding to each mode, one or more connected subgraphs in the interference relation graph, wherein each node in the connected subgraph is at least connected to one other node in the connected subgraph; and

determine a mode of uplink and downlink subframe configurations of each base station equipment according to respective connected subgraphs corresponding to respective modes and one or more isolated nodes.

7. The electronic equipment according to claim 6, wherein the processing circuitry is further configured to:

a. take, as a plurality of connected subgraphs which are initial, the respective connected subgraphs corresponding to the respective modes;
b. select one or more connected subgraphs from the plurality of connected subgraphs, and determine, as a mode corresponding to the selected connected subgraphs, modes of uplink and downlink subframe configurations of base station equipment represented by nodes in the selected connected subgraphs;
c. remove, from connected subgraphs other than the selected connected subgraphs among the plurality of connected subgraphs, the nodes in the selected connected subgraphs, to generate a plurality of connected subgraphs which are updated; and
d. repeatedly perform the steps b and c until an absence of connected subgraphs.

8. The electronic equipment according to claim 7, wherein the processing circuitry is further configured to:
select, according to a node number of a connected subgraph or a throughput of a connected subgraph, one or more connected subgraphs from the plurality of connected subgraphs, wherein the throughput of the connected subgraph represents a product of a node number of the connected subgraph and a throughput of a mode corresponding to the connected subgraph.

9. The electronic equipment according to claim 7, wherein the processing circuitry is further configured to:
determine, with respect to each isolated node of one or more isolated nodes for which modes of uplink and downlink subframe configurations have not yet been determined, a mode of uplink and downlink subframe configurations for base station equipment represented by the isolated node according to one of the principles of:

randomly selecting a mode from candidate modes of uplink and downlink subframe configurations of base station equipment represented by the isolated node;
selecting a mode with a largest throughput from candidate modes of uplink and downlink subframe configurations of base station equipment represented by the isolated node; and
selecting, from candidate modes of uplink and downlink subframe configurations of base station equipment represented by the isolated node, a mode of uplink and downlink subframe configurations which is identical to that of base station equipment represented by another isolated node.

10. The electronic equipment according to claim 1, wherein the processing circuitry is further configured to:

determine a transmission ratio of each base station equipment according to a mode of uplink and downlink subframe configurations of the base station equipment, the transmission ratio representing a ratio occupied by a transmission time period of the base station equipment in a reference time period; and
determine a transmission time period of each base station equipment according to the transmission ratio of each base station equipment, such that transmission time periods of two base station equipment which are neighboring and have different modes of uplink and downlink subframe configurations are not overlapped.

11. The electronic equipment according to claim 10, wherein the processing circuitry is further configured to:

determine, for a base station equipment whose neighboring base station equipment have the same mode of uplink and downlink subframe configurations, a transmission ratio of the base station equipment as 1; and
determine, for a base station equipment whose neighboring base station equipment have different modes of uplink and downlink subframe configurations, a transmission ratio of the base station equipment to be less than 1.

12. The electronic equipment according to claim 10, wherein the processing circuitry is further configured to:
determine, with respect to base station equipment whose neighboring base station equipment have different modes of uplink and downlink subframe configurations, a transmission ratio of the base station equipment with a linear programming method, wherein:
a target function is determined according to transmission ratios of the respective base station equipment whose neighboring base station equipment have different modes of uplink and downlink subframe configurations and throughputs of modes of uplink and downlink subframe configurations of the respective base station equipment, and a constraint condition comprises: a sum of transmission ratios of two base station equipment which are neighboring and have different modes of uplink and downlink subframe configurations not greater than 1.

13. A wireless communication method performed by electronic equipment, comprising:

determining an interference relation graph among a plurality of base station equipment according to environmental information and/or transmission beam information of each base station equipment of the plurality of base station equipment, wherein a node in the interference relation graph represents base station equipment, a side between two nodes represents a presence of interference between two base station equipment represented by the two nodes;

determining a mode of uplink and downlink subframe configurations of each base station equipment according to the interference relation graph; and

determining a transmission time period of each base station equipment according to the mode of uplink and downlink subframe configurations of the base station equipment, such that transmission time periods of two base station equipment which are neighboring and have different modes of uplink and downlink subframe configurations are not overlapped.

14. The wireless communication method according to claim 13, further comprising:

receiving, from base station equipment, information representing that the base station equipment suffers from interference;

determining an updated interference relation graph among the base station equipment and neighboring base station equipment of the base station equipment according to environmental information and/or transmission beam information of each of the base station equipment and the neighboring base station equipment of the base station equipment;

determining a mode of uplink and downlink subframe configurations of each base station equipment according to the updated interference relation graph; and

determining a transmission time period of each base station equipment according to the mode of uplink and downlink subframe configurations of each base station equipment, such that transmission time periods of two base station equipment which are neighboring and have different modes of uplink and downlink subframe configurations are not overlapped.

15. The wireless communication method according to claim 13, further comprising:
determining an absence of interference between two base station equipment, in a case where one base station equipment of the two base station equipment is located in an indoor environment and the other base station equipment is located in an outdoor environment.

16. The wireless communication method according to claim 13, further comprising:
determining an absence of interference between two base station equipment, in a case where a transmit beam direction of one base station equipment of the two base station equipment is away from the other base station equipment and where a transmit beam direction of the other base station equipment is away from the one base station equipment.

17. The wireless communication method according to claim 13, further comprising:

determining a signal to interference plus noise ratio according to position information and transmission power information of two base station equipment, in a case where frequency domain resources used by the two base station equipment are identical or neighboring; and

determining a presence of interference between the two base station equipment, in a case where the signal to interference plus noise ratio is less than a predetermined threshold.

18. The wireless communication method according to claim 13, wherein the determining a mode of uplink and downlink subframe configurations of each base station equipment comprises:

determining, with respect to each mode of one or more candidate modes of uplink and downlink subframe configurations of respective base station equipment, an interference relation graph corresponding to the mode, wherein the interference relation graph corresponding to the mode comprises base station equipment whose candidate modes of uplink and downlink subframe configurations include the mode;

determining, with respect to an interference relation graph corresponding to each mode, one or more connected subgraphs in the interference relation graph, wherein each node in the connected subgraph is at least connected to one other node in the connected subgraph; and

determining a mode of uplink and downlink subframe configurations of each base station equipment according to respective connected subgraphs corresponding to respective modes and one or more isolated nodes.

19. The wireless communication method according to claim 18, wherein the determining a mode of uplink and downlink subframe configurations of each base station equipment comprises:

a. taking, as a plurality of connected subgraphs which are initial, the respective connected subgraphs corresponding to the respective modes;

b. selecting one or more connected subgraphs from the plurality of connected subgraphs, and determine, as a mode corresponding to the selected connected subgraphs, modes of uplink and downlink subframe configurations of base station equipment represented by nodes in the selected connected subgraphs;

c. removing, from connected subgraphs other than the selected connected subgraphs among the plurality of connected subgraphs, the nodes in the selected connected subgraphs, to generate a plurality of connected subgraphs which are updated; and

d. repeatedly performing the steps b and c until an absence of connected subgraphs.

20. The wireless communication method according to claim 19, wherein the selecting one or more connected subgraphs from the plurality of connected subgraphs comprises:
select, according to a node number of a connected subgraph or a throughput of a connected subgraph, one or more connected subgraphs from the plurality of connected subgraphs, wherein the throughput of the connected subgraph represents a product of a node number of the connected subgraph and a throughput of a mode corresponding to the connected subgraph.

21. The wireless communication method according to claim 19, wherein the determining a mode of uplink and downlink subframe configurations of each base station equipment comprises:
determining, with respect to each isolated node of one or more isolated nodes for which modes of uplink and downlink subframe configurations have not yet been determined, a mode of uplink and downlink subframe configurations for base station equipment represented by the isolated node according to one of the principles of:

randomly selecting a mode from candidate modes of uplink and downlink subframe configurations of base station equipment represented by the isolated node;

selecting a mode with a largest throughput from candidate modes of uplink and downlink subframe configurations of base station equipment represented by the isolated node; and

selecting, from candidate modes of uplink and downlink subframe configurations of base station equipment represented by the isolated node, a mode of uplink and downlink subframe configurations which is identical to that of base station equipment represented by another isolated node.

22. The wireless communication method according to claim 13, wherein the determining a transmission time period of each base station equipment comprises:

determining a transmission ratio of each base station equipment according to a mode of uplink and downlink subframe configurations of the base station equipment, the transmission ratio representing a ratio occupied by a transmission time period of the base station equipment in a reference time period; and

determining a transmission time period of each base station equipment according to the transmission ratio of each base station equipment, such that transmission time periods of two base station equipment which are neighboring and have different modes of uplink and downlink subframe configurations are not overlapped.

23. The wireless communication method according to claim 22, wherein the determining a transmission ration of each base station equipment comprises:

determining, for a base station equipment whose neighboring base station equipment have the same mode of uplink and downlink subframe configurations, a transmission ratio of the base station equipment as 1; and

determining, for a base station equipment whose neighboring base station equipment have different modes of uplink and downlink subframe configurations, a transmission ratio of the base station equipment to be less than 1.

24. The wireless communication method according to claim 22, wherein the determining a transmission ration of each base station equipment comprises:
determining, with respect to base station equipment whose neighboring base station equipment have different modes of uplink and downlink subframe configurations, a transmission ratio of the base station equipment with a linear programming method, wherein:
a target function is determined according to transmission ratios of the respective base station equipment whose neighboring base station equipment have different modes of uplink and downlink subframe configurations and throughputs of modes of uplink and downlink subframe configurations of the respective base station equipment, and a constraint condition comprises: a sum of transmission ratios of two base station equipment which are neighboring and have different modes of uplink and downlink subframe configurations not greater than 1.

25. A computer readable storage medium comprising executable computer instructions, wherein the executable computer instructions, when executed by a computer, cause the computer to perform the wireless communication method according to any one of claims 13 to 24.

Electronic equipment 100

Interference
relation graph
determination
unit 110

Mode
determination
unit 120

Transmission
time deter-
mination unit
130

Communication
unit 140

Figure 1

| Base station | Candidate modes |
|---|---|
| 1 | 1, 2, 3 |
| 2 | 3, 5, 9 |
| 3 | 4, 7 |
| 4 | 4, 5 |
| 5 | 5, 6, 9 |
| 6 | 3, 9 |
| 7 | 2, 3, 7 |
| 8 | 2, 3, 5 |
| 9 | 3, 7 |
| 10 | 3, 5 |

Figure 2

Figure 3

Figure 4

Figure 5

Find nodes which are
neighboring and
have the same mode

Figure 6

Determine as mode 3

Figure 7

Figure 8

```
           ┌─────────┐
           │  Start  │
           └────┬────┘
                │
                ▼
   ┌────────────────────────────┐
   │  Determine an interference  │
   │  relation graph among       │
   │  multiple base station      │
   │  equipment according to     │
   │  environmental information   │
   │  and/or transmission beam    │── S910
   │  information of the base     │
   │  station equipment, where a  │
   │  node in the interference    │
   │  relation graph represents   │
   │  base station equipment,     │
   │  and a side between two      │
   │  nodes represents a presence │
   │  of interference between two │
   │  base station equipment      │
   │  represented by the two nodes│
   └────────────┬───────────────┘
                │
                ▼
   ┌────────────────────────────┐
   │  Determine a mode of uplink │
   │  and downlink subframe       │
   │  configurations of each      │── S920
   │  base station equipment      │
   │  according to the            │
   │  interference relation graph │
   └────────────┬───────────────┘
                │
                ▼
   ┌────────────────────────────┐
   │  Determine a transmission    │
   │  time period of each base    │
   │  station equipment according │
   │  to the mode of uplink and   │
   │  downlink subframe           │
   │  configurations of the base  │── S930
   │  station equipment, such     │
   │  that two base station       │
   │  equipment which are          │
   │  neighboring and have         │
   │  different modes of uplink    │
   │  and downlink subframe        │
   │  configurations transmit data │
   │  in orthogonal time           │
   └────────────┬───────────────┘
                │
                ▼
           ┌─────────┐
           │   End   │
           └─────────┘
```

Figure 9

Electronic equipment                                    Base station equipment

**S1001**
Transmit environmental information, transmission
beam information, position information, transmission
power information and frequency domain resource information

**S1002** Determine an interference relation graph among multiple base station equipment

**S1003** Determine a mode of uplink and downlink subframe configurations of each base station equipment

**S1004** Determine a transmission time period of each base station equipment

**S1005** Transmit mode and transmission time period

**S1006**
Transmit data according to the mode and the transmission time period

**S1007**
Transmit information indicating that the base station equipment is interfered

**S1008** Determine an interference relation graph among the interfered base station equipment and neighboring base station equipment of the interfered base station equipment, so as to determine uplink and downlink subframe configurations and transmission time periods of the interfered base station equipment and neighboring base station equipment of the interfered base station equipment

**S1009** Transmit updated mode and transmission time period

Figure 10

**1100**

**1104** **1105**

Network interface

**1106**

**1103** **1102** **1101**

Storage device

Memory

Processor

Figure 11

## INTERNATIONAL SEARCH REPORT

| | International application No. |
|---|---|
| | **PCT/CN2021/070059** |

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT; 3GPP: 上行, 下行, 上下行, 子帧, 不同, 配置, 模式, 干扰, 关系图, 相邻, 基站, 交叠, 重合, 重叠, 交替, 静默, 传输时间, uplink, downlink, subframe, different, configuration, mode, interference, relationship, diagram, adjacent, station, overlap, alternate, silence, transmission, time

**C.    DOCUMENTS CONSIDERED TO BE RELEVANT**

| Category* | Citation of document, with indication, where appropriate, of the relevant passages | Relevant to claim No. |
|---|---|---|
| A | CN 102196580 A (NEW POSTCOM EQUIPMENT CO., LTD.) 21 September 2011 (2011-09-21) <br> entire document | 1-25 |
| A | CN 103733695 A (NEC EUROPE LTD.) 16 April 2014 (2014-04-16) <br> entire document | 1-25 |
| A | CN 101626579 A (ZTE CORPORATION) 13 January 2010 (2010-01-13) <br> entire document | 1-25 |
| A | CN 104350777 A (NTT DOCOMO, INC.) 11 February 2015 (2015-02-11) <br> entire document | 1-25 |
| A | US 2016242125 A1 (LG ELECTRONICS INC.) 18 August 2016 (2016-08-18) <br> entire document | 1-25 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 March 2021** | **25 March 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| | | International application No. |
|---|---|---|
| | | **PCT/CN2021/070059** |

| Patent document cited in search report | | | Publication date (day/month/year) | Patent family member(s) | | | Publication date (day/month/year) |
|---|---|---|---|---|---|---|---|
| CN | 102196580 | A | 21 September 2011 | CN | 102196580 | B | 03 September 2014 |
| CN | 103733695 | A | 16 April 2014 | WO | 2013014169 | A1 | 31 January 2013 |
| | | | | US | 9794049 | B2 | 17 October 2017 |
| | | | | EP | 2737758 | B1 | 30 May 2018 |
| | | | | JP | 5805870 | B2 | 10 November 2015 |
| | | | | US | 2016301514 | A1 | 13 October 2016 |
| | | | | US | 2014153454 | A1 | 05 June 2014 |
| | | | | JP | 2014523725 | A | 11 September 2014 |
| | | | | CN | 103733695 | B | 28 July 2017 |
| | | | | EP | 2737758 | A1 | 04 June 2014 |
| CN | 101626579 | A | 13 January 2010 | CN | 101626579 | B | 04 July 2012 |
| CN | 104350777 | A | 11 February 2015 | JP | 5781016 | B2 | 16 September 2015 |
| | | | | JP | 2013251859 | A | 12 December 2013 |
| | | | | EP | 2858406 | A1 | 08 April 2015 |
| | | | | KR | 20150027056 | A | 11 March 2015 |
| | | | | KR | 101587424 | B1 | 21 January 2016 |
| | | | | EP | 2858406 | A4 | 27 January 2016 |
| | | | | CN | 107094059 | B | 09 July 2019 |
| | | | | WO | 2013183491 | A1 | 12 December 2013 |
| | | | | EP | 2858406 | B1 | 27 December 2017 |
| | | | | CN | 107094059 | A | 25 August 2017 |
| | | | | US | 2015195715 | A1 | 09 July 2015 |
| US | 2016242125 | A1 | 18 August 2016 | US | 2017094610 | A1 | 30 March 2017 |
| | | | | US | 9554339 | B2 | 24 January 2017 |
| | | | | KR | 20160082236 | A | 08 July 2016 |
| | | | | US | 9788280 | B2 | 10 October 2017 |
| | | | | WO | 2015069072 | A1 | 14 May 2015 |

Form PCT/ISA/210 (patent family annex) (January 2015)

**EP 4 089 947 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010026566